# EUROPEAN PATENT SPECIFICATION

(11) **EP 0 477 743 B1**
(45) Date of publication and mention of the grant of the patent: **17.01.1996**
(21) Application number: 91115802.0
(22) Date of filing: 18.09.1991
(51) Int. Cl.: B29B 11/10

(54) **A rubber extruding and specific cutting equipment**
Vorrichtung zum Stangpressen und zum gleichzeitigen Schneiden von Gummi
Dispositif pour l'extrusion de caoutchouc et sa coupe simultanée

(30) Priority: 25.09.1990 JP 255509/90
(43) Date of publication of application: 01.04.1992
(73) Proprietor: NAKATA ZOKI CO., LTD., Kobe-shi, Hyogo-ken (JP)
(72) Inventor: Hiraiwa, Takemi, Kobe-shi, Hyogo-ken (JP)
(74) Representative: Türk, Gille, Hrabal, Leifert

(56) References cited:
- EP-A- 0 108 185
- EP-A- 0 305 692
- FR-A- 2 169 306
- US-A- 4 067 554
- JAPANESE PATENTS REPORTS Section Ch, volume 90, no 31, 12 September 1990 DERWENT PUBLICATIONS Ltd., London,GB; Class A, Page 4, AN 90-234208/31 & JP-A-2 160 528 (MITSUBISHI HEAVY INDUSTRIES K.K.) 20 June 1990
- PATENT ABSTRACTS OF JAPAN vol. 14, no. 416 (M-1021)(4359) 7 September 1990 & JP-A-2 160 528 (MITSUBISHI HEAVY INDUSTRIES LTD) 20 June 1990
- PATENT ABSTRACTS OF JAPAN vol. 8, no. 87 (M-291)(1524) 20 April 1984& JP A-59 005 044 (TOSHIBA KIKAI K.K.) 11 January 1984

## Description

The present invention relates to a rubber extruding and specific cutting equipment for forming a multiplicity of rubber chips continuously and uniformly, by cutting off the rubber forced out from an extruder precisely to a specific dimension.

Rubber products produced in lots, such as seal packing and antivibration rubber, are usually formed by processing the rubber chips which are previously cut. And a volume fluctuation rate of such rubber chips must be set at ±1.5% or less in order to narrow the variations of finishing dimension and volume of rubber products.

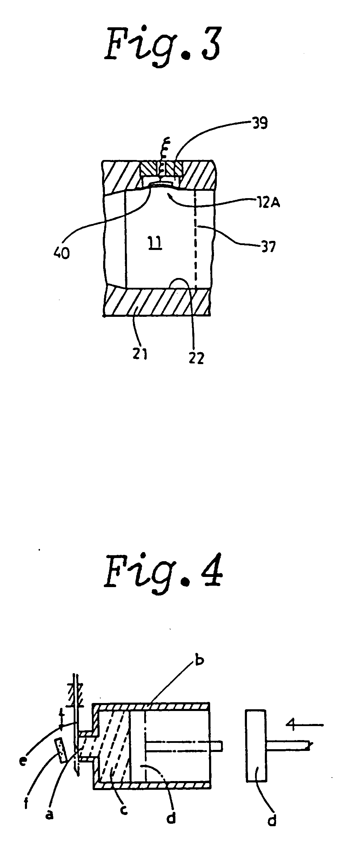

On the other hand, such rubber chips (f) were conventionally manufactured as shown in Fig. 4, for example, in which; a heated rubber material (c) was charged into a cylinder (b) having a discharge port (a) ; and the rubber material (c) continuously pushed out from the discharge port (a) by a piston (d) while kneading was cut off to a specific dimension by a cutter (e) mounted at the discharge port (a), thereby forming a rubber chips (f).

In thus composed equipment, however, the volume of the rubber material (c) was not uniform when kneading the rubber, and the speed of pressing the piston (d) varied, and the quantity of the rubber passing through the discharge port (a) became unstable. Therefore, the rubber chips (f) cut off by the cutter (e) were not uniform in the finishing dimension.

A cascade extruding system comprising a cutter at the outlet of the downstream extruder is known from EP-A- 0 108 185. According to the known apparatus, a heated rubber mixture is fed into an extruder comprising a cylinder in which a piston is sealingly slidable under the action of a push rod driven by a hydraulic cylinder to extrude the material.

FR-A-2 169 306 discloses an extrusion system which comprises a main extruder having a main screw rotating in variable speed for extruding a charged non-expandable resin as well as a subsidiary extruder having a subsidiary screw rotating in constant speed. The outlet of the main extruder and the inlet of the subsidiary extruder are connected to each other with an angular body having a conduit with a constant diameter. A single pressure sensor provided in the angular body detects the fluctuation of pressure of the resin in the conduit. The output of the pressure sensor is applied to a control means for controlling the rotation speed of the main screw so as to keep constant the pressure of the resin in the conduit.

It is an object of the present invention to provide a rubber extruding and specific cutting equipment capable of continuously obtaining homogeneous rubber chips less in volume fluctuation.

This problem is solved, according to the invention, with the features of claim 1.

The present inventor, in order to solve the above problems, intensively studied and found out that the discharge amount of rubber material may be made uniform by installing a subsidiary extruder for sending out a constant quantity at the downstream side of the main extruder.

It was, however, known that the rubber material tends to stick inside the machine, in both main extruder and subsidiary extruder, and that the discharge amount fluctuates due to residue of rubber material. It was learned necessary, as a result, to use extruders allowing less deposit of rubber for both main extruder and subsidiary extruder.

In addition, it is difficult to control the fluctuation of rubber discharge amount by the main extruder within the volume change rate of ±1.5% only by installing the subsidiary extruder. And it is necessary to further stabilize the flow of rubber at the exit of the main extruder. For this purpose it was found necessary to control the extrusion speed of the main extruder at the outlet depending on the flow rate.

The pooling compartment is disposed at the outlet of the main extruder, and therefore the rubber sent out from the main extruder can be stored, and the rubber can be supplied smoothly into the subsidiary extruder.

The subsidiary extruder has a subsidiary screw rotating at a constant speed, and is capable of continuously discharging a uniform quantity of rubber. Still more, both the main extruder and the subsidiary extruder are designed to force out the rubber by means of screw. And unlike other extruding mechanism employing gears or the like, the force pressing against the inner surface of the equipment is not applied to the rubber. Therefore rubber deposit and residue are slight, so that the extrusion amount may be stabilized for a long period.

Furthermore, the main extruder has a main screw of variable speed, and plural pressure sensors for detecting the pressure of the rubber accumulated in the pooling compartment for controlling the rotation of the main screw depending on the detection output is installed in the pooling compartment, so that the quantity of the elastic rubber accumulated in the pooling compartment may be kept constant.

As a result, the subsidiary extruder can discharge the rubber in the pooling compartment by a uniform quantity and at a uniform speed toward the discharge port, and by cutting the discharged rubber to a specific dimension by the cutter, rubber chips of a uniform volume may be obtained continuously.

An embodiment of the present invention will now be described by way of example, referring to the attached drawings, in which:
Fig. 1 is a front view showing an embodiment of the invention:
Fig. 2 is a partial sectional plan view thereof:
Fig. 3 is a sectional view showing other example of pressure sensor: and
Fig. 4 is a sectional view schematically showing a prior art.

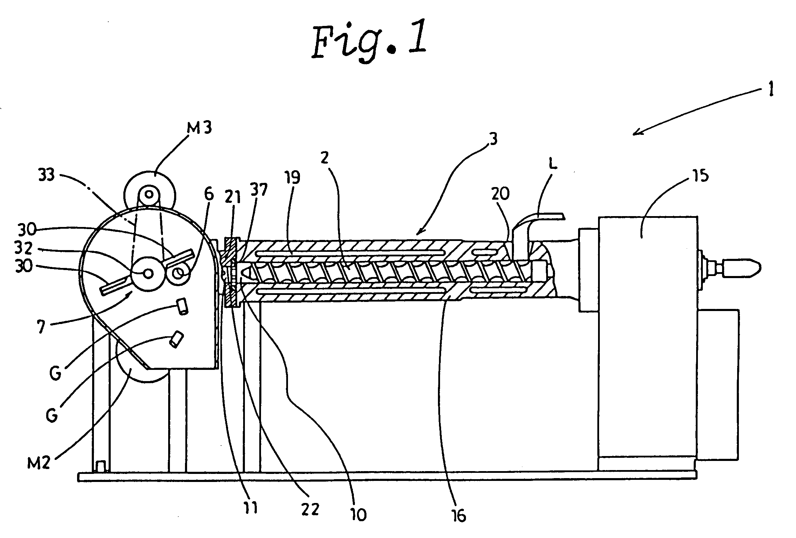

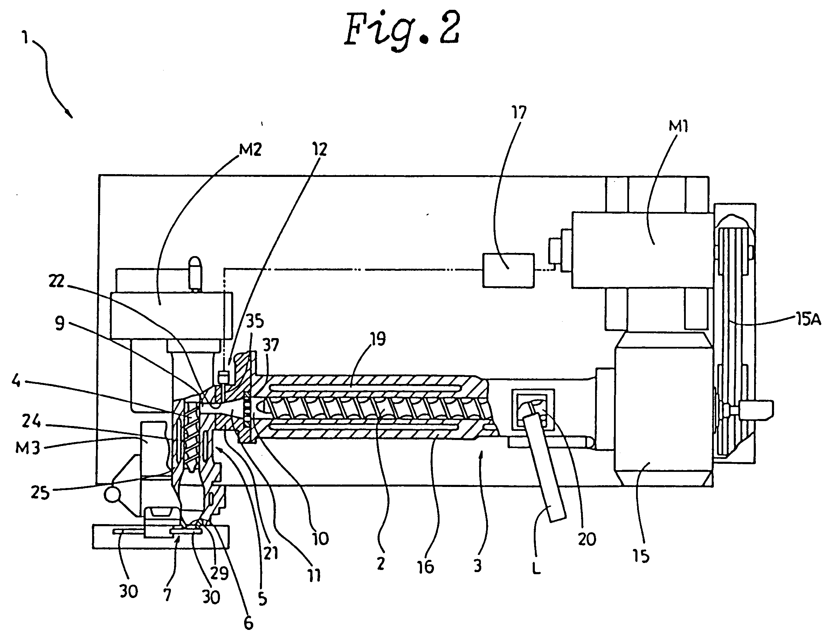

In Fig. 1 to Fig. 3, a rubber extruding and specific cutting equipment 1 for cold feed process comprises a main extruder 3 having a main screw 2, a subsidiary extruder 5 having a subsidiary screw 4, and a cutter 7 disposed at a discharge port 6 of the subsidiary extruder. And an inlet 9 of the subsidiary extruder 5 communicates with a pooling compartment 11 disposed at an outlet 10 of the main extruder 3.

The main extruder 3 has a base part 15 set up on the floor and a cylinder 16 projected horizontally from one side of the base part 15. And the main screw 2 rotatably supported at the end portion of the cylinder 16 is inserted in the inner hole of the cylinder 16. The main screw 2 is attached to the main extruder 3 through a speed reduction mechanism (not shown) provided in the base part 15 and a driving mechanism 15A, and is coupled with a stepless variable speed motor M1 based on a DC motor. The stepless variable speed motor M1 is varied in speed steplessly by means of a speed controller 17 attached thereto. Therefore, the main screw 2 is rotatable at various speed in the cylinder 16.

The stepless variable speed motor M1 may be, meanwhile, a variable speed motor based on an AC motor.

In this embodiment, the cylinder 16 is provided with a water cooling hole 19 for passing cooling water for cooling the cylinder 16 on the periphery, approximately coaxially with the main screw 2. The cylinder 16 also has a charge port 20 for continuously charging the ribbon-shaped rubber material L, penetrating through the wall of the cylinder 16, located near the base part 15.

Therefore, the main extruder 3 kneads up while sending out the ribbon-shaped rubber material L at ordinary temperature charged from the charge port 20 along with the rotation of the main screw 2 toward the front end side, i.e. the outlet 10 by the main screw 2. The rotating speed of the main screw 2 is set in a range of 30 to 90 r.p.m., or preferably 50 to 70 r.p.m. The rubber material L is sequentially raised in temperature along with extrusion by the main screw 2, and reaches about 100 deg. C near the outlet 10 .

The air generated in the kneading process of rubber is discharge outside the machine by means of vacuum pump or the like (not shown).

A pooling compartment 11 is disposed at the outlet 10 of the main extruder 3.

The pooling compartment is formed as a hole 22 extended coaxially with the main screw 2 in a tube body 21. And in this embodiment, the pooling compartment 11 also function as the part for cleaning the vicinity of the outlet 10. Therefore, the tube body 21 is attached to the base part 15 of the main extruder 3 detachably and airtightly by connection means such as bolt and screw.

Also, the pooling compartment 11 is narrowing toward the downstream side.

The subsidiary extruder 5 has the subsidiary screw 4 inserted in contact with an inner hole 24 of an cylinder 25 same as the main extruder.

The inner hole 24 is disposed in a direction to intersect with the axial center of the main screw 2, and has the inlet 9 communicating with the pooling compartment 11. The cylinder 25 is fixed with the tube body 21 forming the pooling compartment 11. Therefore, the subsidiary extruder 5 is fixed at the main extruder 3 through the tube body 21 .

The subsidiary screw 4 is coupled with the output shaft of a constant speed drive motor M2 installed at the end of the cylinder 25, and the subsidiary screw 4 rotates along with driving of the motor M2. As the motor M2, an AC induction motor always rotating at a determined speed may be preferably used. The rotating speed of the subsidiary screw 4 is set so that the subsidiary extruder 5 may extrude nearly a same volume as the main extruder 3.

At the outer end of the cylinder 25, that is, at the outlet, a discharge port 6 is formed so as to reduce the inner hole 24 toward the outside. At the outside of the discharge port 6, there is a cutter 7 having a knife 30 for cutting off the rubber continuously discharged from the discharge port 6.

The cutter 7 comprises plural, two in this embodiment, i.e. knives 30, 30 disposed at the boss part mounted on a rotary shaft 32 having the center at a position distant from the discharge port 6. And the rotary shaft 32 is coupled with the output shaft of a constant speed motor M3 such as AC induction motor, through power transmission means 33 such as chain train, and rotates at constant speed. Therefore the knife 30 revolving about the center of rotation of the rotary shaft 32 passes the end part of a die 29 at every specific time interval, and cuts off the rubber continuously discharged from the discharge port 6, thereby forming rubber chips C.

A pressure sensor 12 is disposed in the pooling compartment 11.

The pressure sensor 12, in this embodiment, is disposed at the outer end of a guide hole 35 leading to the pooling compartment 11, and detects the pressure of the rubber existing in the guide hole 35 which is at the same pressure as in the pooling compartment 11.

The detection output of the pressure sensor 12 is transmitted to the speed controller 17 attached to the stepless variable speed motor M1, and the speed controller 17 slows down the stepless variable speed motor M1 by the output signal of increasing pressure from the pressure sensor 12, or accelerates the speed of stepless variable speed motor M1 by the output signal of decreasing pressure.

Therefore, the rubber pressure in the pooling compartment 11 may be kept constant by the pressure sensor 12. Besides, in the pooling compartment 11, the rubber is sent out to the subsidiary extruder 5 at constant pressure, and the extrusion amount of the subsidiary extruder 5 is further stabilized, so that the rubber chips C cut off by the cutter 7 is homogeneous being less in volume fluctuation.

In this embodiment, meanwhile, the pooling compartment 11 is provided with an inlet filter 37 at the front end of the pooling compartment 11, so that invasion of dust and impurity into the pooling compartment 11 is prevented, while the stability of rubber pressure in the pooling compartment 11 is further enhanced.

Using the rubber extruding and specific cutting apparatus 1 of the invention, rubber chips was produced, and the volume change rate was within ±1.5%, and the initial purpose was achieved.

Fig. 3 shows other example of pressure sensor. In this example, a hole 39 is formed in the wall of the tube body 21. And the pressure sensor 12A has a membrane plate 40, which is disposed at the opening toward the pooling compartment 11 and capable of deforming by the pressure of the rubber accumulated in the pooling compartment 11. And it is designed to detect the rubber pressure by measuring the expansion or contraction of the membrane plate 40. The rubber extruding and specific cutting equipment of the invention may be also of hot feed process. According to the invention, a plurality of pressure sensors is disposed in the pooling compartment so as to control the rotation of the main screw by the mean value.

## Claims

1. A rubber extruding and specific cutting equipment (1) for obtaining rubber chips by cutting continuously extruded rubber to a specific dimension comprising:
a main extruder (3) having a main screw (2) rotatable at variable speed for extruding a rubber continuously from an outlet (10) of the main extruder (3),
a subsidiary extruder (5) having an inlet (9) communicating with a pooling compartment (11) disposed at the outlet (10) of the main extruder (3), and a subsidiary screw (4) rotatable at constant speed,
**characterized in**
that plural pressure sensors (12) are provided in the pooling compartment (11), said plural pressure sensors (12) detecting the fluctuation of the pressure of the rubber in the pooling compartment (11), and controlling the rotation speed of the main screw (2) by the mean value of detection output of the plural pressure sensors (12) so as to keep constant the pressure of the rubber in the pooling compartment (11),
that said pooling compartment (11) is narrowing toward the downstream, and
that a cutter (7) is disposed at a discharge port (6) of the subsidiary extruder (5) for cutting the rubber continuously discharged from the discharge port (6) to a specific dimension, said cutter comprising plural knives (30) mounted on a rotary shaft (32) rotatable at constant speed having a center at a position distant from the center of the discharge port (6).

## Patentansprüche

1. Eine Vorrichtung (1) für die Extrusion von Gummimaterialien mit einem spezifischen Schneidwerkzeug für die Herstellung von Gummistücken durch das Abschneiden von kontinuierlich extrudiertem Gummimaterial auf eine spezifische Abmessung, welche folgendes aufweist:
einen Hauptextruder (3) mit einer mit variabler Geschwindigkeit drehbaren Hauptschraube (2), um ein Gummimaterial kontinuierlich aus einem Auslaß (10) des Hauptextruders (3) zu extrudieren,
einen Hilfsextruder (5) mit einer Einlaöffnung (9), welche mit einem Sammelbecken (11) kommuniziert, das an dem Auslaß (10) des Hauptextruders (3) angeordnet ist, und eine mit konstanter Geschwindigkeit drehende Hilfsschraube (4),
**dadurch gekennzeichnet**, **daß**
in dem Sammelbecken 11 eine Vielzahl von Druckfühlern (12) vorgesehen ist, und daß diese Druckfühler (12) die Veränderung des Druckes des Gummimaterials in dem Sammelbecken (11) feststellen und die Rotationsgeschwindigkeit der Hauptschraube (2) mit Hilfe des mittleren Wertes des von der Vielzahl von Meßfühlern abgegebenen Meßsignals kontrolliert wird, um den Druck des Gummimaterials in dem Sammelbecken (11) konstant zu halten,
und daß sich das Sammelbecken (11) stromabwärts verjüngt, und
daß ein Schneidwerkzeug (7) an der Auslaßöffnung (6) des Hilfsextruders (5) angeordnet ist, um das kontinuierlich aus der Auslaßöffnung (6) abgegebene Gummimaterial in einer spezifischen Abmessung abzuschneiden, wobei dieses Schneidwerkzeug eine Vielzahl von Messern (30) aufweist, welche auf einer mit konstanter Geschwindigkeit drehbaren Welle (32) montiert sind, deren Zentrum sich in einer Position befindet, welche im Abstand von dem Mittelpunkt der Auslaßöffnung (6) angeordnet ist.

## Revendications

1. Dispositif (1) pour l'extrusion de caoutchouc et sa coupe simultanée pour obtenir des pastilles de caoutchouc par sectionnement en continu du caoutchouc extrudé, à une dimension déterminée, comprenant :
une extrudeuse principale (3) ayant une vis principale (2) mobile en rotation à vitesse variable pour extruder un caoutchouc en continu à partir d'une sortie (10) de l'extrudeuse principale (3),
une extrudeuse secondaire (5) ayant une entrée (9) communiquant avec un compartiment de concentration (11) placé sur la sortie (10) de l'extrudeuse principale (3), et une vis secondaire (4) mobile en rotation à vitesse constante,
caractérisé en
ce que plusieurs détecteurs de pression (12) sont prévus dans le compartiment de concentration (11), lesdits plusieurs détecteurs de pression (12) détectant la variation de la pression du caoutchouc dans le compartiment de concentration (11), et conmmandant la vitesse de rotation de la vis principale (2) au moyen de la valeur de sortie de détection de l'ensemble des détecteurs de pression (12), de manière à maintenir constante la pression du caoutchouc dans le compartiment de concentration (11).
ce que ledit compartiment de concentration (11) va en se rétrécissant vers l'aval, et
ce qu'un couteau (7) est placé sur un orifice d'évacuation (6) de l'extrudeuse secondaire (5) pour sectionner le caoutchouc évacué en continu depuis l'orifice d'évacuation (6), à une dimension déterminée, ledit couteau comprenant plusieurs lames (30) montées sur un arbre rotatif (32) mobile en rotation à vitesse constante, ayant un centre sur une position distante du centre de l'orifice d'évacuation (6).
